# EUROPÄISCHE PATENTANMELDUNG

(11) **EP 3 670 251 A1**
(43) Veröffentlichungstag der Anmeldung: **24.06.2020**
(21) Anmeldenummer: 19212791.8
(22) Anmeldetag: 02.12.2019
(51) Int. Cl.: B60N 2/02, B60N 2/42, B60N 2/427

(54) **INSASSENSCHUTZSYSTEM, UMFASSEND EIN AKTIVIERBARES RÜCKENLEHNENTEIL EINES FAHRZEUGSITZES**

(30) Priorität: 21.12.2018 DE 102018222737
(71) Anmelder: Volkswagen AG, 38440 Wolfsburg (DE)
(72) Erfinder: Glas, Ernst, 38550 Isenbüttel (DE); Wendt, Lea, 38470 Parsau (DE); Köhler, Matthias, 38527 Meine (DE); Stahl, Arne, 38518 Gifhorn (DE)

(57) **Zusammenfassung**

Die Erfindung betrifft ein Insassenschutzsystem (S) eines Fahrzeuges (F), welches ein Überwachungs- und Rückhaltesystem (R) umfasst, das mittels einer Umfeldsensorik (R2) zu einem Pre-Crash-Zeitpunkt (t_{vor-A}, t_{vorE}) einen etwaigen Crash erkennt und eine sich im Crashfall zu einem Crashzeitpunkt (t0) im Wesentlichen in der Fahrposition (I) auf einem Fahrzeugsitz (10) befindende Person (P) mittels eines Rückhaltesystems (R; R1) des Fahrzeugsitzes (10) sicher auf dem Fahrzeugsitz (10) zurückhält.

Es ist vorgesehen, dass die Rückenlehne (14) einen kombinierten Komfort-/Pre-Crash-Verstellmechanismus aufweist, mittels dem eine Rückenlehne (14) außerhalb eines Crashfalls gegenüber einem Sitzteil mittels eines Komfort-Lehnenneigungs-Verstellmechanismus neigungsverstellbar und im Crashfall mittels eines Pre-Crash-Lehnenneigungs-Verstellmechanismus ab einem sensierten Pre-Crash-Zeitpunkt (t_{vor-A}, t_{vorE}) noch vor dem Crashzeitpunkt (t₀) aktiv in die Fahrposition (I) bringbar ist, wenn sich die Rückenlehne (14) zum Pre-Crash-Zeitpunkt (t_{vor-A}, t_{vorE}) außerhalb der Fahrposition (I) befindet, wobei der Pre-Crash-Lehnenneigungs-Verstellmechanismus zum Pre-Crash-Zeitpunkt (t_{vor-A}, t_{vorE}) von dem Komfort-Lehnenneigungs-Verstellmechanismus entkoppelbar ist.

## Beschreibung

Die Erfindung betrifft ein Insassenschutzsystem eines Fahrzeuges, welches ein Überwachungs- und Rückhaltesystem umfasst, das mittels einer Umfeldsensorik zu einem Pre-Crash-Zeitpunkt einen etwaigen Crash erkennt und eine sich im Crashfall zu einem Crashzeitpunkt im Wesentlichen in der Fahrposition auf einem Fahrzeugsitz befindende Person mittels eines Rückhaltesystems des Fahrzeugsitzes sicher auf dem Fahrzeugsitz zurückhält.

Die Druckschrift DE 10 2004 058 779 A1 beschreibt einen Fahrzeugsitz, umfassend eine Sitzfläche, eine Sitzlehne, ein Zwischenelement, welches zwischen der Sitzfläche und der Sitzlehne angeordnet ist und einen Aktuator, wobei am Zwischenelement ein erstes Gelenk und ein zweites Gelenk angeordnet sind, wobei das Zwischenelement mit der Sitzfläche über das erste Gelenk verbunden und mit der Sitzlehne über das zweite Gelenk verbunden ist und wobei der Aktuator die Sitzlehne bei Vorliegen einer vorbestimmten Fahrsituation über wenigstens eines der Gelenke automatisch in eine definierte Position bringt.

Die Druckschrift DE 199 61 799 A1 offenbart ein passives Sicherheitssystem eines Kraftfahrzeugs mit mehreren Sicherheitseinrichtungen, welche mit jeweils zugeordneten Antrieben aus einem Normalzustand in einen unfallbedingten Sicherheitszustand bewegbar sind und einer Precrash-Sensorik, deren Sensorsignale eine Steuereinrichtung ansteuern, welche in Abhängigkeit von den Precrash-Signalen die Sicherheitseinrichtungen reversibel kurzzeitig betätigen.

Der Erfindung liegt die Aufgabe zugrunde, ein Rückenlehnenteil eines Fahrzeugsitzes in einem Fahrzeug bei Vorliegen einer vorbestimmten Fahrsituation des Fahrzeuges mittels eines Insassenschutzsystems aus einer in der vorbestimmten Fahrsituation vorhandenen Position in eine für die auf dem Fahrzeugsitz sitzende Person in eine Sicherheitsposition zu bringen.

Ausgangspunkt der Erfindung ist ein Insassenschutzsystem eines Fahrzeuges, welches ein Überwachungs- und Rückhaltesystem umfasst, das mittels einer Umfeldsensorik zu einem Pre-Crash-Zeitpunkt einen etwaigen Crash erkennt und eine sich im Crashfall zu einem Crashzeitpunkt im Wesentlichen in der Fahrposition auf einem Fahrzeugsitz befindende Person mittels eines Rückhaltesystems des Fahrzeugsitzes sicher auf dem Fahrzeugsitz zurückhält.

Es ist vorgesehen, dass die Rückenlehne einen kombinierten Komfort-/Pre-Crash-Verstellmechanismus aufweist, mittels dem eine Rückenlehne außerhalb eines Crashfalls gegenüber einem Sitzteil mittels eines Komfort-Lehnenneigungs-Verstellmechanismus neigungsverstellbar und im Crashfall mittels eines Pre-Crash-Lehnenneigungs-Verstellmechanismus ab einem sensierten Pre-Crash-Zeitpunkt noch vor dem Crashzeitpunkt aktiv in die Fahrposition bringbar ist, wenn sich die Rückenlehne zum Pre-Crash-Zeitpunkt außerhalb der Fahrposition befindet, wobei der Pre-Crash-Lehnenneigungs-Verstellmechanismus zum Pre-Crash-Zeitpunkt von dem Komfort-Lehnenneigungs-Verstellmechanismus entkoppelbar ist. Die erfindungsgemäße Lösung löst in vorteilhafter Weise den Mangel an einem Verstellmechanismus, der die herkömmliche Komfortneigungsverstellung mit einer Pre-Crashneigungsverstellung in einem Verstellmechanismus zur Verfügung stellt.

Bevorzugt ist vorgesehen, dass durch eine Sensorik des Insassenschutzsystems eine spezifische Sensierung der Position des aktiven Rückenlehnenteiles in einem vorgebbaren Sitzlehnen-Neigungswinkelbereich erfolgt, wobei ein Sitzsteuergerät über den Pre-Crash-Lehnenneigungs-Verstellmechanismus eine Anpassung des Sitzlehnen-Neigungswinkels vornimmt, wenn der Fahrzeugsitz durch eine Sitzbelegungssenorik als belegt erkannt wird und die aktive Rückenlehne zum Pre-Crash-Zeitpunkt nicht in der Fahrposition angeordnet ist. In vorteilhafter Weise wird somit ein Sitzsteuergerät, welches bisher für die herkömmliche Komfort-Neigungsverstellung zur Verfügung stand, derart implementiert, sodass mit dem Programm im Sitzsteuergerät der Komfort-Lehnenneigungs-Verstellmechanismus und der Pre-Crash-Lehnenneigungs-Verstellmechanismus ansteuerbar sind.

Bevorzugt ist vorgesehen, dass die Anpassung des Sitzlehnen-Neigungswinkels durch den Pre-Crash-Lehnenneigungs-Verstellmechanismus erfolgt, der mindestens einen Antrieb aufweist, der eine Schnellverstellung der aktiven Rückenlehne zur Anpassung des Sitzlehnen-Neigungswinkels ermöglicht. Es werden bevorzugt elektromotorische Antriebe mit Hochleistungsmotoren verwendet, um die Schnellverstellung der aktiven Rückenlehne zu gewährleisten. Diese Lösung ist elektromotorisch, wobei darüber hinaus in vorteilhafter Weise eine elektromechanische Ausgestaltung vorgesehen ist, die sich dadurch auszeichnet, dass die Anpassung des Sitzlehnen-Neigungswinkels der aktiven Rückenlehne durch den Pre-Crash-Lehnenneigungs-Verstellmechanismus mittels des mindestens einen Antriebs durch ein vorgespanntes Federelement unterstützt wird, die in dem Pre-Crash-Lehnenneigungs-Verstellmechanismus integriert ist, wobei das Federelement zwischen dem Pre-Crash-Zeitpunkt und dem Crashzeitpunkt mit dem mindestens einen Antrieb zusammenwirkt.

Mittels der elektromotorischen oder elektromechanischen Ausgestaltung wird im Crashfall mittels des Pre-Crash-Lehnenneigungs-Verstellmechanismus eine positionsabhängige Rückstellung der aktiven Rückenlehne um einen vorgegebenen Neigungswinkel von Δα </= 20° des Rückenlehnenteils in einer vorgegebenen Zeitpanne zwischen 100 ms und 500 ms und/oder positionsunabhängig eine Rückstellung der aktiven Rückenlehne um einen vorgegebenen maximalen Rückstellwinkel Δα = 20° in einer vorgegebenen Zeitspanne zwischen 100 ms und 500 ms vorgesehen.

Bevorzugt ist vorgesehen, dass der mindestens eine Antrieb ein Bürsten aufweisender Gleichstrommotor oder mindestens ein bürstenloser DC-Hochleistungs-Gleichstrommotor ist, der auf eine Querstange wirkt, die den Pre-Crash-Lehnenneigungs-Verstellmechanismus antreibt.

Ferner ist bevorzugt vorgesehen, dass der mindestens eine Antrieb mit einem Planetengetriebe oder einem Wolfrom-Planetengetriebe gekoppelt ist, das auf die Querstange wirkt, die den Pre-Crash-Lehnenneigungs-Verstellmechanismus antreibt.

Insbesondere ist vorgesehen, dass der Pre-Crash-Lehnenneigungs-Verstellmechanismus mit dem Komfort-Lehnenneigungs-Verstellmechanismus gekoppelt ist, wobei zur eine Anpassung des Sitzlehnen-Neigungswinkels eine Entkopplung vorgenommen wird, wenn der Fahrzeugsitz durch eine Sitzbelegungssenorik als belegt erkannt wird und die aktive Rückenlehne zum Pre-Crash-Zeitpunkt nicht in der Fahrposition angeordnet ist.

Aus Sicherheitsüberlegungen ist in vorteilhafter Weise vorgesehen, dass der Pre-Crash-Koppelmechanismus eine Sperrklinke ist, die zwischen dem Komfort-Lehnenneigungs-Verstellmechanismus und dem Pre-Crash-Lehnenneigungs-Verstellmechanismus angeordnet ist, wobei die Sperrklinke des Pre-Crash-Lehnenneigungs-Verstellmechanismus gegenüber dem Komfort-Lehnenneigungs-Verstellmechanismus im gekoppelten Zustand und im entkoppelten Zustand durch die Komponenten des Pre-Crash-Lehnenneigungs-Verstellmechanismus jeweils in einer Verriegelungsstellung sicher gehalten ist, wie in der Beschreibung detailliert erläutert ist.

Vorteilhaft ist die Lösung insbesondere auch dadurch, dass der kombinierte Komfort-/Pre-Crash-Verstellmechanismus als kompakter Beschlag ausgebildet ist, wobei der Komfort-Lehnenneigungs-Verstellmechanismus ein Dreh-/Taumelbeschlag ist, der zwischen dem Sitzteil des Fahrzeugsitzes und dem Rückenlehnenteil des Fahrzeugsitzes angeordnet ist, wobei der Dreh-/Taumelbeschlages mit dem Pre-Crash-Lehnenneigungs-Verstellmechanismus kombiniert ausgebildet ist.

Dabei ist insbesondere vorgesehen, dass die Kopplung des Komfort-Lehnenneigungs-Verstellmechanismus, insbesondere des Dreh-/Taumelbeschlages mit dem Pre-Crash-Lehnenneigungs-Verstellmechanismus eine herkömmliche Komfort-Neigungsverstellung gewährleistet, da die Sperrklinke im gekoppelten Zustand eine Drehbewegung einer Querstange des Dreh-/Taumelbeschlages, die durch einen Antrieb des Komfort-Lehnenneigungs-Verstellmechanismus angetrieben wird, auf die Komponenten den Pre-Crash-Lehnenneigungs-Verstellmechanismus überträgt. Mit anderen Worten, der Komfort-Lehnenneigungs-Verstellmechanismus und der Pre-Crash-Lehnenneigungs-Verstellmechanismus sind antriebsseitig entkoppelt, sodass der Komfort-/Crash-Verstellmechanismus in vorteilhafter Weise hinsichtlich der Antriebe spezifisch auf die Komfortfunktion des Komfort-Lehnenneigungs-Verstellmechanismus und die Schnellverstellfunktion der aktiven Rückenlehne des Pre-Crash-Lehnenneigungs-Verstellmechanismus im Crashfall ausgelegt werden kann.

Die Erfindung wird nachfolgend anhand der zugehörigen Zeichnungen erläutert. Es zeigen:
- Figur 1: eine Seitenansicht eines Fahrzeugsitzes zur Verdeutlichung von bestimmten Positionen eines Rückenlehnenteiles des Fahrzeugsitzes;
- Figur 2: eine Darstellung des Rückenlehnenteiles in einer Seitenansicht zur Verdeutlichung der Definition eines Neigungswinkels des Rückenlehnenteiles;
- Figur 3: eine schematische Darstellung eines Innenraumes eines Fahrzeuges mit einem Fahrzeugsitz, der beispielhaft im Innenraum im Bereich eines Lenkrades des Fahrzeuges angeordnet ist;
- Figur 4.1: eine Seitenansicht auf eine Ausführungsform eines Pre-Crash-Lehnnenneigungs-Verstellmechanismus;
- Figur 4.2: eine perspektivische Ansicht auf die Ausführungsform gemäß Figur 4.1 des Pre-Crash-Lehnnenneigungs-Verstellmechanismus;
- Figur 5.1: einer schematisierte Draufsicht auf einen ersten Verstellmechanismus eines sogenannten aktiven Rückenlehnenteiles, der einen Pre-Crash-Lehnnenneigungs-Verstellmechanismus gemäß den Figuren 4.1 und 4.2 und einen Komfort-Lehnnenneigungs-Verstellmechanismus in Kombination umfasst, zur Verdeutlichung der Konzeption und zur Verdeutlichung einer möglichen ersten Antriebsvariante;
- Figur 5.2: eine schematisierte Draufsicht auf den ersten Verstellmechanismus des aktiven Rückenlehnenteiles, der einen Pre-Crash-Lehnenneigungs-Verstellmechanismus gemäß den Figuren 4.1 und 4.2 und einen Komfort-Lehnenneigungs-Verstellmechanismus in Kombination umfasst, zur Verdeutlichung der Konzeption und zur Verdeutlichung einer möglichen zweiten Antriebsvariante;
- Figur 6.1 bis 6.3: eine sequentielle Übersichtsdarstellung (in einer Ansicht von Außen) auf einen modifizierten Lehnenneigungs-Verstellmechanismus (erste Ausführungsvariante) eines aktiven Rückenlehnenteiles, der den Pre-Crash-Lehnenneigungs-Verstellmechanismus und einen Komfort-Lehnenneigungs-Verstellmechanismus in Kombination umfasst;

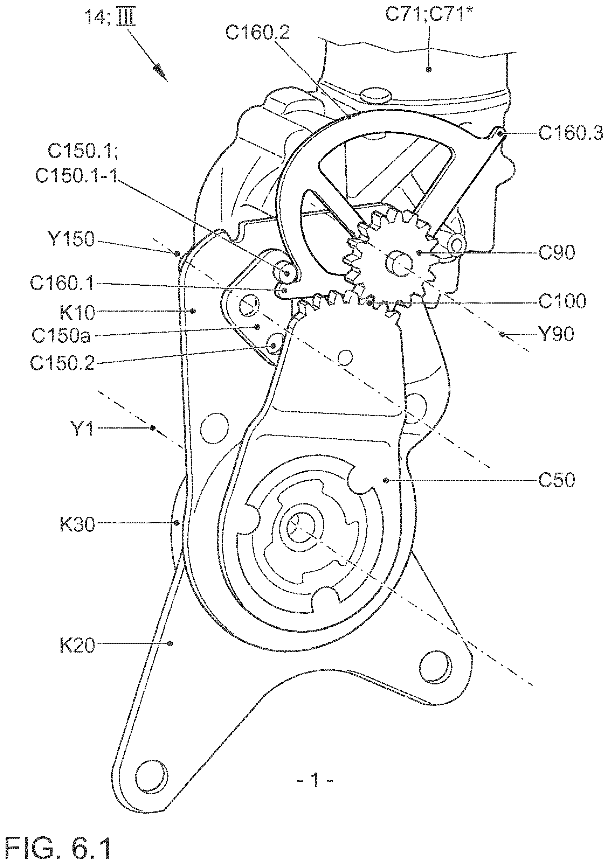

- Figur 6.1: der modifizierte Lehnenneigungs-Verstellmechanismus (in der Ansicht von Außen), wobei sich ein Drehbeschlag des Komfort-Lehnenneigungs-Verstellmechanismus gegenüber dem Pre-Crash-Lehnenneigungs-Verstellmechanismus in einer Verriegelungsstellung - 1 - befindet, bei der das Rückenlehnenteil nicht mittels des Pre-Crash-Lehnenneigungs-Verstellmechanismus schnellneigungsverstellbar ist;

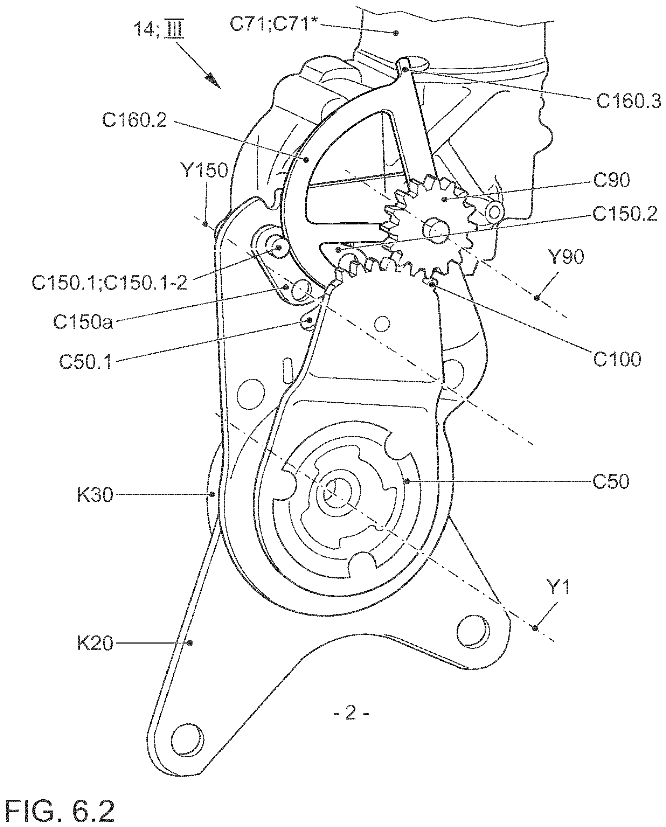

- Figur 6.2: der modifizierte Lehnenneigungs-Verstellmechanismus (in der Ansicht von Außen), wobei sich der Drehbeschlag des Komfort-Lehnenneigungs-Verstellmechanismus gegenüber dem Pre-Crash-Lehnenneigungs-Verstellmechanismus in einer Entriegelungsstellung - 2 - befindet, bei der das Rückenlehnenteil noch nicht mittels des Pre-Crash-Lehnenneigungs-Verstellmechanismus schnellneigungsverstellbar ist;

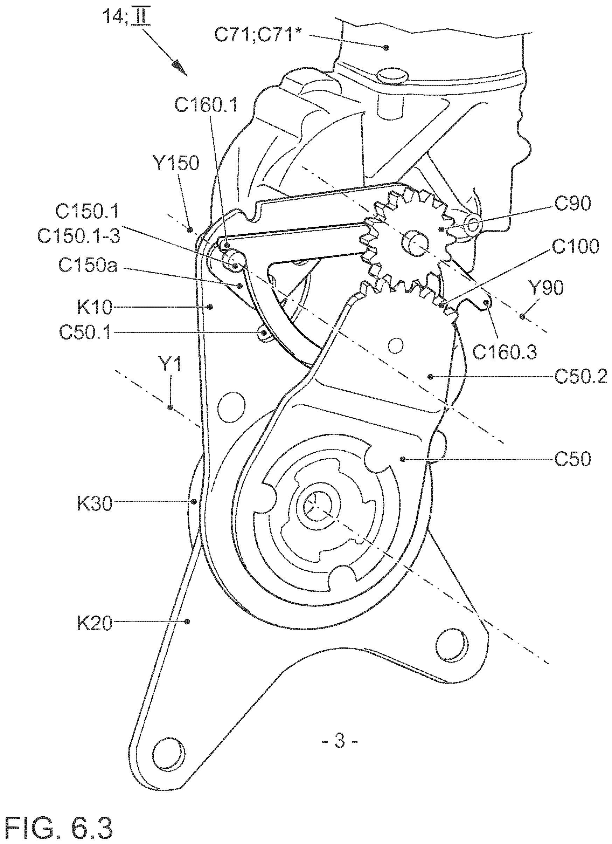

- Figur 6.3: der modifizierte Lehnenneigungs-Verstellmechanismus (in der Ansicht von Außen), wobei sich der Drehbeschlag des Komfort-Lehnenneigungs-Verstellmechanismus gegenüber dem Pre-Crash-Lehnenneigungs-Verstellmechanismus in einer Verriegelungsstellung - 3 - befindet, bei der das Rückenlehnenteil mittels des Pre-Crash-Lehnenneigungs-Verstellmechanismus schnellneigungsverstellbar ist;

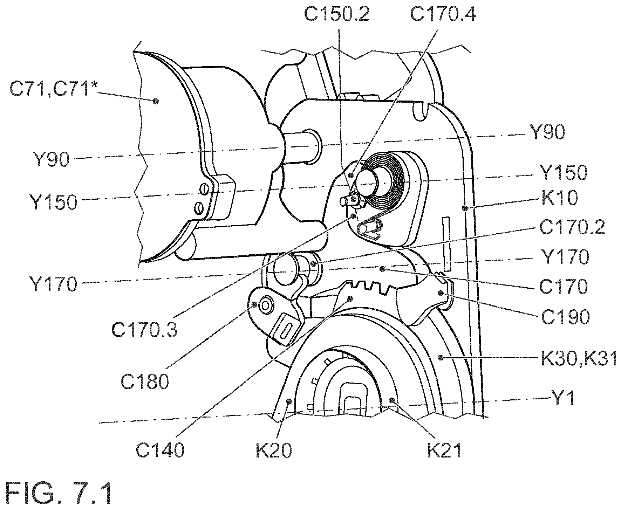

- Figur 7.1: der modifizierte Lehnenneigungs-Verstellmechanismus (in einer Ansicht von Innen), wobei sich der Drehbeschlag des Komfort-Lehnenneigungs-Verstellmechanismus gegenüber dem Pre-Crash-Lehnenneigungs-Verstellmechanismus zwar in einer Entriegelungsstellung - 2 - befindet, jedoch das Rückenlehnenteil noch nicht neigungsverstellbar ist, da der Pre-Crash-Lehnenneigungs-Verstellmechanismus noch nicht vom dem Komfort-Lehnenneigungs-Verstellmechanismus entkoppelt ist;

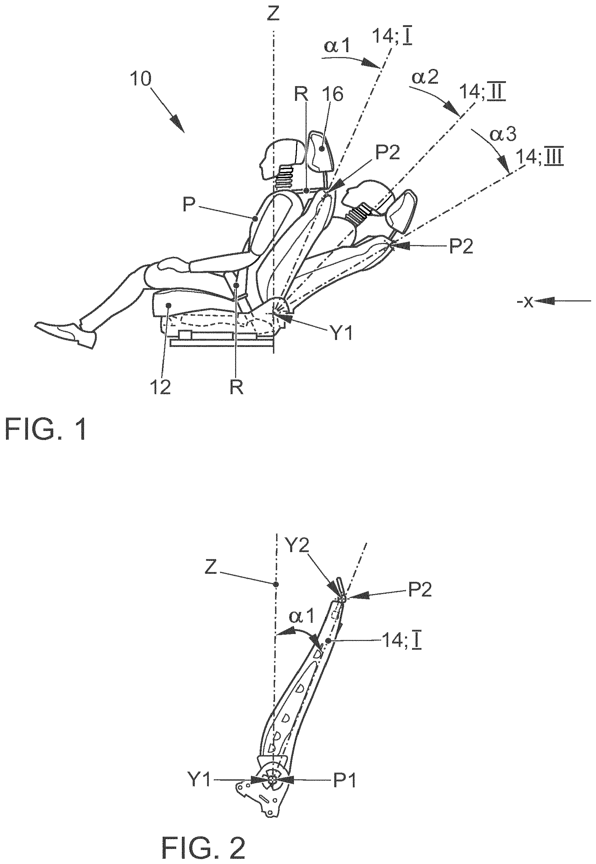

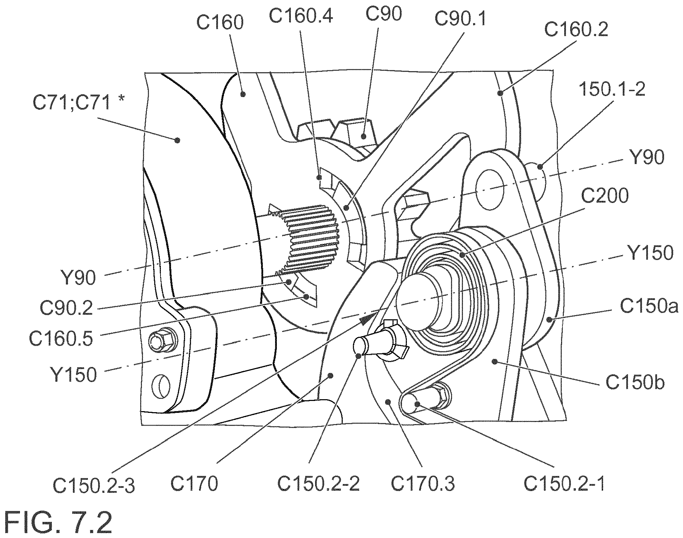

- Figur 7.2: der modifizierte Lehnenneigungs-Verstellmechanismus gemäß Figur 1 in einer vergrößerten Darstellung.

Figur 1 zeigt einen Fahrzeugsitz 10, der in bekannter Weise ein Sitzteil 12 und ein Rückenlehnenteil 14 umfasst. Eine aufsitzende Person ist mit dem Bezugszeichen P gekennzeichnet. Durch Neigungsverstellung der Rückenlehne 14 kann der Oberkörper der Person P ausgehend von einer Fahrposition 14; I in eine Arbeitsposition 14; II oder in eine Liegeposition 14; III um eine Schwenkachse Y1 quer zur Fahrtrichtung -x reversibel verschwenkt werden.

Den Positionen I, II und III gemäß Figur 1 sind gegenüber einer gedachten Vertikalen V in z-Richtung, die in Figur 2 dargestellt ist, und einer Längsachse des Rückenlehnenteiles 14 in Längserstreckung des Rückenlehnenteiles 14 bestimmte Neigungswinkel α1, α2, α3 zugeordnet. Die Längsachse des Rückenlehnenteiles 14 verläuft zwischen den Auslegungspunkten P1 und P2. Der Auslegungspunkt P1 liegt dabei auf der Schwenkachse Y1 des Rückenlehnenteiles 14 und der Auslegungspunkt P2 liegt auf einer Schwenkachse Y2 einer Kopfstütze 16, deren Kopfstützenhalterung am oberen Ende des Rückenlehnenteiles 14 in die Struktur des Rückenlehnenteiles 14 eingreift.

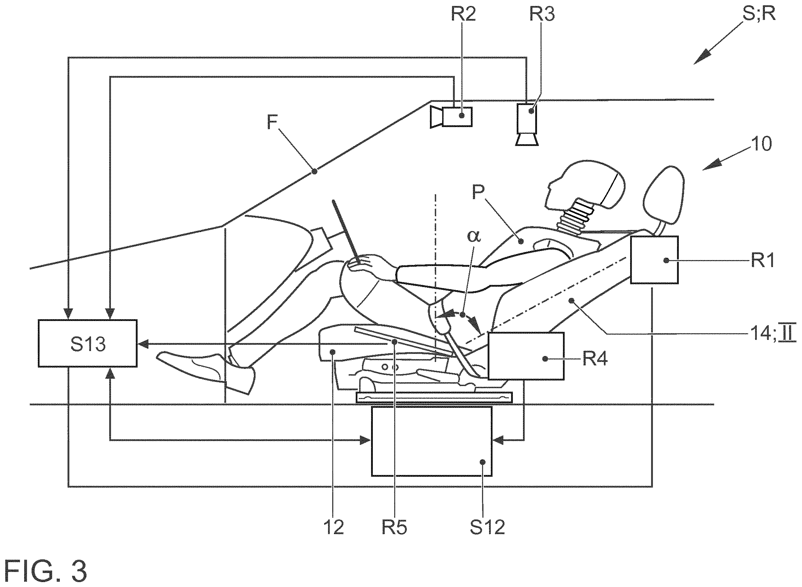

Der Fahrposition 14; I des Rückenlehnenteiles 14 ist auslegungsseitig ein Neigungswinkel α1 von 25° und der Arbeitsposition 14; II ist auslegungsseitig ein Neigungswinkel α2 von 40° und der Liegeposition 14; III ist auslegungsseitig ein Neigungswinkel α3 von 60° zugeordnet. Die Bezeichnung Arbeitsposition 14; II wurde gewählt, da die Person P in dieser Arbeitsposition 14; II noch Tätigkeiten ausführt und zudem analog zu der herkömmlichen Fahrposition 14; I beim autonomen Fahren in dieser Position noch in der Lage ist, durch entsprechenden Eingriff in die Führung des Fahrzeuges 1 (vergleiche Figur 3) zu übernehmen. Bei der Liegeposition 14; III wird davon ausgegangen, dass das Rückenlehnenteil einen Sitzlehnen-Neigungswinkel α3 eingenommen hat, bei dem die Person P nicht mehr in das Fahrgeschehen eingreifen kann.

Dabei wird davon ausgegangen, dass die Person P bereits bei Überschreitung des Sitzlehnen-Neigungswinkels α2 in Richtung der Liegeposition 14; III nicht mehr in der Lage ist, in das Fahrgeschehen einzugreifen.

Insofern ergibt sich ein Sitzlehnen-Neigungswinkelbereich zwischen 40° und 60°, der insgesamt als Ruhe-Sitzposition der Person P eingenommen werden kann. Dieser Sitzlehnen-Neigungswinkelbereich zwischen 40° und 60° ist in Bezug auf die stark geneigte Torso-Lage der Person P gegenüber der Fahrposition 14; I des Rückenlehnenteiles 14 beim Insassenschutz zu berücksichtigen. Um den Insassenschutz bei einem etwaigen Unfall zu gewährleisten, ist es erforderlich, dass die Rückenlehne 14 rechtzeitig automatisch aufgerichtet wird.

Einerseits vorgesehen ist, dass ein Überwachungs- und- Rückhaltesystem R eines Insassenschutzsystems S durch eine adaptive Steuerung den Sitzlehnen-Neigungswinkel zwischen α1 und α3 insgesamt berücksichtigt. Es ist eine spezifische Sensierung der Position des Sitzteiles 12 und des Rückenlehnenteiles 14 zur Steuerung des Rückhaltesystems R vorgesehen. Das Rückhaltesystem R umfasst neben dem Brustgurt und dem Beckengurt einen reversiblen Gurtstraffer R1 der mit einem Airbagsteuergerät S13 steuerungsseitig in Verbindung steht.

Andererseits ist die spezifische Sensierung der Position des Rückenlehnenteiles 14, insbesondere im Sitzlehnen-Neigungswinkelbereich zwischen 40° und 60° dahingehend vorgesehen, dass Informationen zum Sitzlehnen-Neigungswinkelbereich verarbeitet und eine schnelle Weitergabe der Informationen an ein Sitzsteuergerät S12 (vergleiche Figur 3) des Insassenschutzsystems S sichergestellt werden, wodurch über das Sitzsteuergerät S12 eine Anpassung des Sitzlehnen-Neigungswinkels vorgenommen wird.

In Figur 3 ist das Insassenschutzsystem S mit seinen wesentlichen Komponenten dargestellt. Das Insassenschutzsystem S umfasst eine Umfeldsensorik R2, die das Umfeld des Fahrzeuges 1 sensiert, so dass Gefahrensituationen, die gegebenenfalls zu einem Heckcrash und/oder Frontcrash und/oder Seitencrash führen, noch vor dem Eintreten des eigentlichen Crashereignisses detektiert werden können.

Das Insassenschutzsystem S umfasst ferner eine Innenraumsensorik R3, insbesondere mindestens eine Innenraumkamera, welche den Innenraum des Fahrzeuges sensiert. Durch die Innenraumsensorik R3 kann festgestellt werden, in welcher Position sich die Person P gerade befindet.

Das Insassenschutzsystem S weist zudem mindestens einen Winkelsensor R4 auf, der die Lage der Rückenlehne 14 gegenüber dem Sitzteil 12 erfasst und an das Sitzsteuergerät S12 weiterleitet. Über das Sitzsteuergerät S12 erfolgt bevorzugt auch die Steuerung der Lehnenneigungsverstellung, worauf noch näher eingegangen wird.

Das Airbagsteuergerät S13 steht steuerungsseitig, wie in Figur 3 dargestellt ist, mit der Umfeldsensorik R2 und der Innenraumsensorik R3 in Verbindung, wobei ferner deutlich wird, dass das Airbagsteuergerät S13 mit dem Sitzsteuergerät S12 kommuniziert.

Im Ergebnis steht ein Insassenschutzsystem S zur Verfügung, welches in der Lage ist die absolute Position der Lehnenneigung, das heißt den Sitzlehnen-Neigungswinkel zwischen α1 und α3 zu ermitteln, wobei vorgesehen ist, dass der Sitzlehnen-Neigungswinkel α im normalen Fahrbetrieb mit einer Abtastrate von 200 ms und in einem ermittelten Pre-Crash-Fall von 20 ms ermittelt wird.

Dabei ist erfindungsgemäß vorgesehen, dass eine schnelle Lehnenneigungsverstellung von Δα = 20° innerhalb von einer maximalen Verstellzeit von 200 ms erreicht wird. Vorgesehen ist, dass die Verstellung in einem von dem Insassenschutzsystem S ermittelten frühesten Pre-Crash-Zeitpunkt t_{vor-A} beginnt und zu einem spätesten Pre-Crash-Zeitpunkt t_{vor-E} endet, wobei der späteste Pre-Crash-Zeitpunkt t_{vor-E} vor einem Crash-Zeitpunkt t₀, in dem ein Crash stattfindet, abgeschlossen ist.

Diese Randbedingungen erfordern somit eine sehr schnelle Ansteuerung der Lehnenneigungverstellkomponenten, damit ein schnelles Aufrichten des Rückenlehnenteiles 14 gewährleistet werden kann. Vorgesehen ist, um eine möglichst insassenschonende Neigungsverstellung des Rückenlehnenteiles 14 zu gewährleisten, dass sichergestellt wird, dass die Information aus dem Pre-Crash-System des Insassenschutzsystems S möglichst früh zur Verfügung steht, wobei vorgesehen ist, dass der früheste Pre-Crash-Zeitpunkt t_{vor-A} = 600 ms vor dem Crash-Zeitpunkt to liegt.

In einer ersten Ausführungsvariante ist vorgesehen, dass das Rückenlehnenteil 14, wenn es sich im Sitzlehnen-Neigungswinkelbereich zwischen 40° und 60° befindet, reversibel zumindest auf 40° Lehnenneigung 14; II in die Arbeitsposition II verstellt wird, sodass je nach Position des Rückenlehnenteiles 14 eine positionsabhängige Rückstellung Δα </= 20° erfolgt.

In einer zweiten Ausführungsvariante ist vorgesehen, dass das Rückenlehnenteil 14, wenn es sich im Sitzlehnen-Neigungswinkelbereich zwischen 40° und 60° befindet, reversibel stets um 20° Lehnenneigung 14; II in eine andere Position verstellt, sodass in jeder Position des Rückenlehnenteiles 14 stets positionsunabhängig eine maximale Rückstellung um einen festgelegten Rückstellwinkel Δα = 20° erfolgt.

Das Insassenschutzsystem S umfasst ferner in redundanter Weise neben der Innenraumsensorik R3 eine Sitzbelegungssensorik R5 zur Erfassung der Sitzbelegung. Es ist vorgesehen, dass das erfindungsgemäße schnelle automatische Aufrichten des Rückenlehnenteiles 14 aus der Liegeposition/Ruheposition 14; III nur dann möglich ist, wenn die Person P auf dem Fahrzeugsitz 10 aufsitzt. Dadurch wird insbesondere ausgeschlossen, dass bei einem auf dem Fahrzeugsitz 10 angeordneten Kindersitz oder einem unbelegten Fahrzeugsitz 10 eine Aufrichtung erfolgt. Ausschließlich ein mittels der Sitzbelegungssensorik R5 als von einer Person P belegter Fahrzeugsitz 10 ist somit für die schnelle Lehnenneigungsverstellung freigegeben. Die Sitzbelegungssensorik R5 ist bevorzugt steuerungsseitig mit dem Airbagsteuergerät S13 verbunden.

Im Falle eines unklaren Status im Insassenschutzsystem S wird ein Hinweis über das Infotainment-System ausgegeben. Liegt beispielsweise einer der folgenden Fehler vor oder eine erforderliche Randbedingung nicht vor, wie, - Fehler in der automatischen Fahrfunktion des Fahrzeuges 1, - fehlerhafte Informationen aus den Steuergeräten S12, S13, fehlerhafter Sitzbelegungsstatus, - Person nicht angegurtet, wird das automatische Verfahren zum reversiblen Aufrichten des Rückenlehnenteiles 14 aus der Ruhe-Position 14; III in eine andere sicherer Position nicht durchgeführt.

Unter Berücksichtigung dieser Vorgaben besteht die Erfindung nun darin, einen Lehnenneigungs-Verstellmechanismus zu schaffen, der einen Verstellmechanismus zur normalen Komfort-Lehnenneigungsverstellung (Komfort-Lehnenneigungs-Verstellmechanismus) und einen Verstellmechanismus zur Pre-Crash-Lehnenneigungsverstellung (Pre-Crash-Lehnenneigungs-Verstellmechanismus) zur normalen reversiblen Neigungsverstellung und zur schnellen reversiblen Neigungsverstellung, insbesondere zum schnellen reversiblen Aufrichten, mithin einer Aufrichtung des Rückenlehnenteiles 14 wie zuvor beschrieben, umfasst.

Im Ergebnis wird ein "aktives Rückenlehnenteil" 14 geschaffen, welches durch einen Verstellmechanismus gekennzeichnet ist, der eine Kombination aus Komfort-Lehnenneigungs-Verstellmechanismus und Pre-Crash-Lehnenneigungs-Verstellmechanismus darstellt, wie nachfolgend erläutert wird.

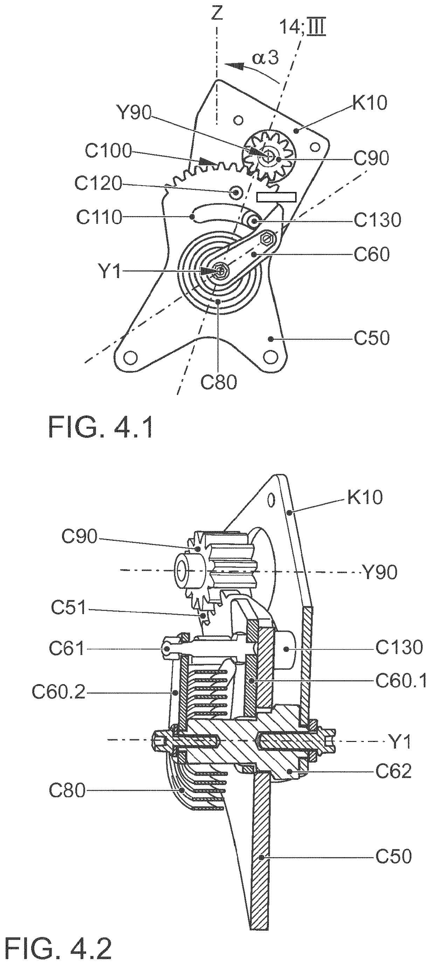

In der nachfolgenden Beschreibung der Figuren 4 bis 7.2 werden die Bauteile, die zu dem Komfort-Lehnenneigungs-Verstellmechanismus der Komfort-Lehnenneigungsverstellung und die zu dem Pre-Crash-Lehnenneigungs-Verstellmechanismus der Pre-Crash-Lehnenneigungsverstellung gehören, vorgestellt und mit Bezugszeichen versehen, die nicht in der Figur neu erläutert werden, wenn sie zuvor vorgestellt worden sind.

Die Figur 4.1 zeigt eine Seitenansicht auf eine beispielhafte Ausführungsform eines Pre-Crash-Lehnenneigungs-Verstellmechanismus. Zugehörig zeigt die Figur 4.2 eine perspektivische Ansicht auf die Ausführungsform gemäß Figur 4.1 des Pre-Crash-Lehnenneigungs-Verstellmechanismus. Die Figuren 4.1 und 4.2 werden nachfolgend in einer Zusammenschau erläutert.

Der Pre-Crash-Lehnenneigungs-Verstellmechanismus ist in dieser Ausführungsform noch nicht mit einem Komfort-Lehnenneigungs-Verstellmechanismus gekoppelt. Insofern verdeutlichen die Figuren 4.1 und 4.2 zunächst eine erfinderische prinzipielle Grundidee, die in den nachfolgenden modifizierten Verstellmechanismen prinzipiell zum Einsatz kommt.

Dargestellt ist ein rückenlehnenseitiger Adapter K10, welcher mit einer Rückenlehne 14 verbunden ist.

Es wird angenommen, dass die Rückenlehne 14 gegenüber der gedachten vertikalen Achse Z beispielsweise in einem Winkel α3 in der Liegeposition 14; III angeordnet ist.

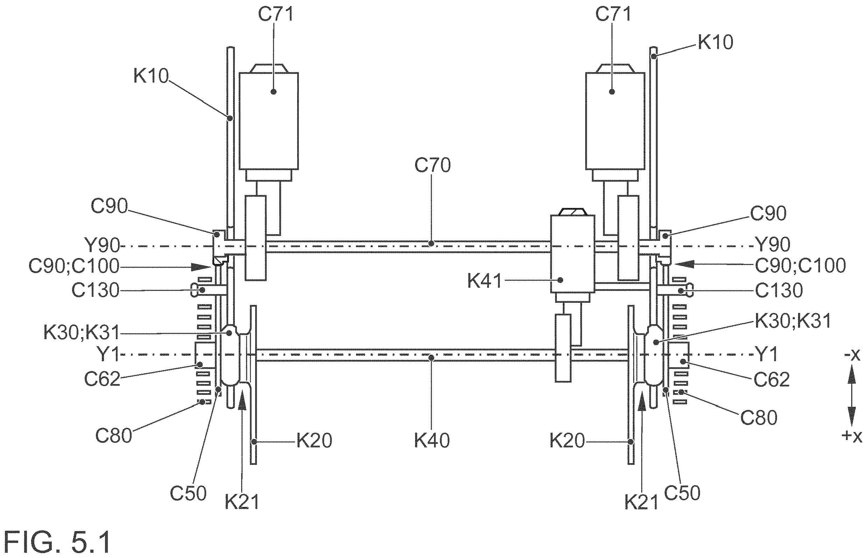

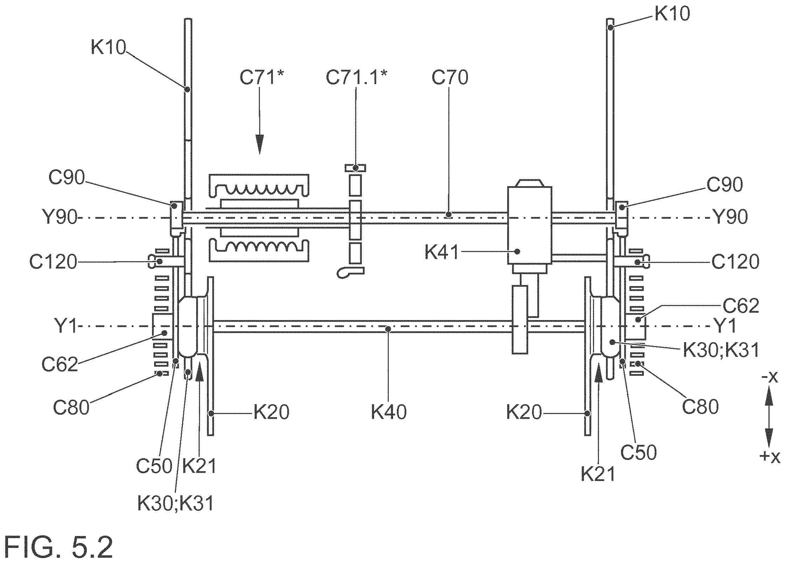

Der Pre-Crash-Lehnenneigungs-Verstellmechanismus umfasst ferner einen rückenlehnenseitigen Zahnsegment-Adapter C50. Der rückenlehnenseitige Zahnsegment-Adapter C50 ist mit dem rückenlehnenseitigen Adapter K30 eines Dreh-/Taumelbeschlages (vergleiche Figuren 5.1 und 5.2) verbunden.

Der rückenlehnenseitige Adapter K30 des Dreh-/Taumelbeschlages umfasst im Ausführungsbeispiel ein Hohlrad K31.

Auf einer Drehachse Y90 (vergleiche Figuren 4.1 und 4.2) ist ein Zahnrad C90 angeordnet, welches auf einer Querstange C70 (vergleiche die Figuren 5.1 und 5.2) gelagert ist.

Es wird deutlich, dass die Querstange C70 den rückenlehnenseitigen Adapter K10 durchgreift.

Das Zahnrad C90 kämmt mit seiner Verzahnung eine Verzahnung C100, die an dem rückenlehnenseitigen Zahnsegment-Adapter C50 angeordnet ist. Im Zusammenbauzustand liegen Zahnrad C90 und Zahnflanke C100 in einer Ebene, wie in Figur 4.2 deutlich wird.

Auf einer Schwenkachse Y1 des Dreh-/Taumelbeschlages (auf den später noch eingegangen wird) ist ein Lagerelement C62 (vergleiche Figur 4.2) angeordnet, auf dem der rückenlehnenseitige Zahnsegment-Adapter C50 und der rückenlehnenseitigen Adapter K10 angeordnet sind.

Bei einer Drehbewegung der Querstange K40 werden die Adapter C50 und K10 im Rahmen einer herkömmlichen Neigungsverstellung gemeinsam mitgenommen, wenn sie mit dem Dreh-/Taumelbeschlag gekoppelt sind, wie noch erläutert wird.

Wie in Figur 4.2 am besten zu sehen ist, sind von links nach rechts gesehen auf diesem Lagerelement C62 ein äußeres Hebelelement C60.2, ein Federelement C80, insbesondere eine Spiralfeder und ein inneres Hebelelement C60.1 gelagert, wobei die Hebelelemente C60.1 und C60.2 über ein Verbindungselement C61 miteinander verbunden sind.

Das äußere Hebelelement C60.2 sichert dabei die Spiralfeder C80, die mit einem Ende fest mit dem Lagerelement C62 und mit einem anderen Ende mit mindestens einem der Hebelelemente C60.1, C60.2 und/oder mit dem Verbindungselement C61 verbunden ist.

In der in den Figuren 4.1 und 4.2 dargestellten Position ist die Spiralfeder C80 in einem vorgespannten Zustand.

Das rückenlehnenseitige Zahnsegment-Adapter C50 weist eine kulissenartige Führungskontur C110 auf. Diese Führungskontur C110 wird von einem Mitnehmerpin C130 durchgriffen, der, wie in Figur 4.2 dargestellt ist, fest mit dem rückenlehnenseitigen Adapter K10 verbunden ist.

Auf der vorderen Fläche des rückenlehnenseitigen Zahnsegment-Adapters C50 ist zudem ein Anschlagselement C120 angeordnet, welches ebenfalls als Anschlagspin ausgebildet ist.

In Figur 4.1 ist ersichtlich, dass der Mitnehmer C130 in der Führungskontur C110 einen rechten Anschlag bildet, der die Ausgangsposition darstellt, wobei gleichzeitig das Zahnrad C90 ebenfalls in der Verzahnung C100 auf der rechten Seite angeordnet ist.

Eine schnelle Verstellung dieses Pre-Crash-Lehnenneigungs-Verstellmechanismus erfolgt erfindungsgemäß elektromechanisch über mindestens einen Antrieb C71, C71*, zu denen noch weiter ausgeführt wird.

Ist eine Schnellverstellung der Lehnenneigung des Rückenlehnenteiles 14 aus der beispielsweise dargestellten Liegeposition 14;111 notwendig, so wird mindestens ein Antrieb C71, C71* in Betrieb gesetzt, der die Querachse C70 dreht, wodurch die bis dahin durch den Antrieb C71, C71* gehemmte Mechanik zwischen Zahnrad C90 des Zahnrades und der Verzahnung C100 des Zahnsegment-Adapters C50 aufgehoben wird.

Die Querstange K40 auf der Schwenkachse Y1 dreht sich nicht. Durch die Drehbewegung der Querachse C70, wird der rückenlehnenseitige Adapter K10 um die Schwenkachse Y1 verschwenkt, während der Zahnsegment-Adapter C50 seine Position nicht verändert.

Der rückenlehnenseitige Adapter K10 und Zahnsegment-Adapters C50 können sich somit relativ zueinander auf der Schwenkachse Y1 verlagern.

Der jeweilige mindestens eine Antrieb C70, C71* setzt das Zahnrad C90 in Bewegung, wodurch das Rückenlehnenteil 14 durch die Schwenkbewegung des rückenlehnenseitigen Adapters K10 um Y1 aus seiner jeweiligen Position, insbesondere der Liegeposition III, vom Neigungswinkel α3 in Richtung der vertikalen Achse Z verstellt wird.

Durch die antriebsseitige Freigabe der Querachse C70 wirkt nun auch mechanisch die Kraft der vorgespannten Spiralfeder C80 auf mindestens eines der miteinander verbundenen Hebelelemente C60.1, S60.2, wobei das innere Hebelelement C60.1, welches eine Nase C60.11 aufweist, gegen den Mitnehmer C130 drückt, der an dem rückenlehnenseitigen Adapter K10 angeordnet ist.

Dadurch wird die elektrische Verstellkraft durch die mechanische Verstellkraft unterstützt, so dass der jeweilige Antrieb C71, C71* geringere Kräfte zur Neigungsverstellung der Rückenlehne 14 erzeugen muss.

Die Verstellung erfolgt solange, bis die Nase C60.11 des inneren Hebelelementes C60.1das Anschlagselement C120 erreicht, wodurch der Verstellwinkel Δα des Pre-Crash-Lehnenneigungs-Verstellmechanismus begrenzt ist. Die Nase C60.11 des inneren Hebelelementes C60.1 ist entsprechend lang ausgebildet, so dass sowohl der Mitnehmer C130 als auch das Anschlagselement C120 erreicht werden.

Diese elektromechanische Verstellung ist durch die Kraft des jeweiligen Antriebes C71, C71* und durch die Kraft der Spiralfeder C80 derart ausgelegt, dass eine Schnellverstellung im gewünschten Millisekundenbereich, insbesondere innerhalb von 20 ms, um einen Differenzwinkel Δα = 20° gemäß der oben beschriebenen zweiten Ausführungsvariante zwischen α3 und α1 (vergleiche Figur 1) möglich ist.

Der in den Figuren 4.1 und 4.2 dargestellte Pre-Crash-Lehnenneigungs-Verstellmechanismus ist in bevorzugter Ausgestaltung beidseitig (vergleiche Figuren 5.1 und 5.3) angeordnet, so dass die in die Struktur des Fahrzeugsitzes 10 eingeleiteten Kräfte in x-Richtung gesehen symmetrisch eingeleitet werden.

Die Figur 5.1 zeigt eine schematisierte Draufsicht auf einen "Komfort-/Pre-Crash-Verstellmechanismus" einer aktiven Rückenlehne 14, der einen Pre-Crash-Lehnenneigungs-Verstellmechanismus nach dem Prinzip der zu den Figuren 4.1 und 4.2 erläuterten Lösung und einen Komfort-Lehnenneigungs-Verstellmechanismus in Kombination umfasst, wobei in Figur 5.1 die prinzipielle Konzeption verdeutlicht wird. Diese Konzeption ist in Figur 5.1 mit einer ersten möglichen Antriebsvariante dargestellt.

In der Draufsicht gemäß Figur 5.1 ist die zuvor beschriebene Querstange K40 dargestellt, welche auf der Schwenkachse des Dreh-/Taumelbeschlages Y1 angeordnet ist.

Dieser Querstange K40 ist ein Antrieb K41 zugeordnet, der oberhalb einer Querstange C70 angeordnet ist. Der Antrieb K41 ist an einem der beiden rückenlehnenseitigen Adapter K10 ortsfest angeordnet.

Zur herkömmlichen Verstellung des Dreh-/Taumelbeschlages, der durch die Drehbewegung der Querstange K40 drehverstellt wird, wird üblicherweise - wie in den Figuren 5.1 und 5.2 dargestellt - nur ein Antrieb K41 benötigt.

In Ergänzung zu den Figuren 4.1 und 4.2 ist in den Figuren 5.1 und 5.2 der Dreh-/Taumelbeschlag dargestellt.

Sichtbar sind die spiegelbildlich in x-Richtung gesehen angeordneten sitzteilseitigen Adapter K20 der Dreh-/Taumelbeschläge mit ihren Stirnrädern K21, an die sich von innen nach außen gesehen jeweils ein Hohlrad K31 des jeweiligen Dreh-/Taumelbeschlages anschließt, welche dem rückenlehnenseitigen Adapter K30 zugeordnet sind.

Die Figur 5.1 zeigt zudem das bereits in den Figuren 4.1 und 4.2 beschriebene Lagerelement C62, auf dem die Spiralfeder C80 und die Hebelelemente C60.1, C60.2 angeordnet sind.

In der Draufsicht gemäß Figur 4.1 ist auch der Mitnehmer C130 dargestellt, der die kulissenartige Führung C110 des jeweiligen rückenlehnenseitigen Zahnsegment-Adapters C50 durchgreift.

Gemäß dem Bezugszeichen C90, C100 greift das Zahnrad mit seiner Verzahnung C90 in die Verzahnung C100 des Zahnsegment-Adapters C50 ein.

In der Antriebsvariante gemäß Figur 5.1 wird die Querstange C70, auf der spiegelsymmetrisch die Zahnräder C90 angeordnet sind, durch zwei herkömmliche Antriebe vom Typ A angetrieben, wobei die Antriebe Motoren C71 aufweisen, die als herkömmliche Gleichstrommotoren ausgebildet sind.

Durch Anordnung von zwei solcher Antriebe C71 können die entsprechenden Momente, das heißt die Antriebskräfte auf die Querstange C70 übertragen werden, die notwendig sind, um eine entsprechende Schnellverstellung des Rückenlehnenteiles 14 um den Verstellwinkel Δα=20° in einer gewünschten Verstellzeit von 20 ms bewirken zu können.

Die Figur 5.2 zeigt den kombinierten Komfort-/Pre-Crash-Verstellmechanismus des aktiven Rückenlehnenteiles 14, der den Pre-Crash-Lehnenneigungs-Verstellmechanismus nach dem Prinzip der Figuren 4.1 und 4.2 den Komfort-Lehnenneigungs-Verstellmechanismus in Kombination umfasst, wobei dort eine zweite Antriebsvariante dargestellt ist, bei der nur ein Antrieb C71* vom Typ B benötigt wird, der die Querstange C70 in Drehbewegung versetzt und in geeigneter Weise (nicht näher dargestellt) strukturfest innerhalb des Fahrzeugsitzes gelagert ist.

Bei diesem Antrieb C71* vom Typ B wird ein bürstenloser Hochleistungs-Gleichstrommotor eingesetzt, der pro Zeiteinheit wesentlich größere Kräfte erzeugen kann, so dass pro Zeiteinheit ein größeres Drehmoment auf die Querstange C70 übertragen werden kann. Dadurch ist im Ergebnis erfindungsgemäß nur ein einziger Antrieb C71* notwendig, um die entsprechenden Kräfte zur Verstellung der aktiven Rückenlehne 14 in der gewünschten Zeit von ca. 20 ms zur Schnellverstellung um einen Neigungswinkel von maximal Δα = 20° aufzubringen.

Bevorzugt wird um ein entsprechendes Übersetzungsverhältnis zu gewährleisten, ein Planetengetriebe C71.1 * oder ein Wolfrom-Planetengetriebe C71.1 * angeordnet, welches die durch den Antrieb hervorgerufene Drehbewegung bei entsprechendem vorgebbaren Übersetzungsverhältnis auf die Querstange C70 überträgt.

Aus Figur 5.2 wird deutlich, dass der kombinierte Komfort-/Pre-Crash -Verstellmechanismus des aktiven Rückenlehnenteiles 14 somit nur noch zwei Antriebe, den Antrieb C71* und den Antrieb K41 aufweist, wobei der Antrieb K41 die normale Neigungsverstellung des Komfort-Lehnenneigungs-Verstellmechanismus und der Antrieb C71* vom Typ B die Schnellneigungsverstellung des Pre-Crash-Lehnenneigungs-Verstellmechanismus bewirkt.

Die bisherige Beschreibung erläutert die grundsätzliche Idee der Schnellneigungsverstellung des Pre-Crash-Lehnenneigungs-Verstellmechanismus in Kombination mit dem Komfort-Lehnenneigungs-Verstellmechanismus.

In der nachfolgenden Beschreibung wird eine bevorzugte Ausführungsvariante erläutert, wie die Verstellmechanismen im Detail miteinander verbunden werden, um sicherzustellen, dass der Komfort-Lehnenneigungs-Verstellmechanismus ohne den Pre-Crash-Lehnenneigungs-Verstellmechanismus betätigt werden kann und dass der Pre-Crash-Lehnenneigungs-Verstellmechanismus aus einer gegenüber dem Komfort-Lehnenneigungs-Verstellmechanismus ersten Verriegelungsposition in eine Position kommt, in der der Pre-Crash-Lehnenneigungs-Verstellmechanismus in einer Freigabeposition ist, in der die Schnellneigungsverstellung unabhängig von dem Komfort-Lehnenneigungs-Verstellmechanismus möglich ist.

Die grundsätzliche Idee besteht hinsichtlich der Kopplung der Verstellmechanismen darin, einen Pre-Crash-Koppelmechanismus zu integrieren, der die Verstellmechanismen des kombinierten Komfort-/Pre-Crash-Verstellmechanismus miteinander verbindet.

Mit anderen Worten, die bisher beschriebene Grundidee bleibt erhalten, die bisher beschriebenen Verstellmechanismen werden entsprechend modifiziert, sodass der Lehnenneigungs-Verstellmechanismus den Komfort-Lehnenneigungs-Verstellmechanismus und den Pre-Crash-Lehnenneigungs-Verstellmechanismus sowie den Pre-Crash-Entriegelungsmechanismus umfasst.

Figur 6.1 zeigt den modifizierten Komfort-/Pre-Crash-Verstellmechanismus (in der Ansicht von Außen), wobei der Komfort-Lehnenneigungs-Verstellmechanismus des Dreh-/Taumelbeschlages über eine rückseitig angeordnete Sperrklinke C170 mit dem Pre-Crash-Lehnenneigungs-Verstellmechanismus gekoppelt ist. Der Pre-Crash-Lehnenneigungs-Verstellmechanismus befindet sich dabei in einer gesicherten Verriegelungsstellung - 1 -, in der der rückenlehnenseitige Adapter K10 gegenüber dem Zahnsegment-Adapter C50 verriegelt ist.

Figur 6.2 zeigt den modifizierten Komfort-/Pre-Crash-Verstellmechanismus (in der Ansicht von Außen), wobei der Komfort-Lehnenneigungs-Verstellmechanismus des Dreh-/Taumelbeschlages über eine rückseitig angeordnete Sperrklinke C170 mit dem Pre-Crash-Lehnenneigungs-Verstellmechanismus noch gekoppelt ist. Der Pre-Crash-Lehnenneigungs-Verstellmechanismus befindet sich dabei in einer Entriegelungsstellung - 2 -, in der der rückenlehnenseitige Adapter K10 gegenüber dem Zahnsegment-Adapter C50 unverriegelt ist.

Figur 6.3 zeigt den modifizierten Komfort-/Pre-Crash-Verstellmechanismus (in der Ansicht von Außen), wobei der Komfort-Lehnnenneigungs-Verstellmechanismus des Dreh-/Taumelbeschlages über eine rückseitig angeordnete Sperrklinke C170 mit dem Pre-Crash-Lehnenneigungs-Verstellmechanismus entkoppelt ist. Der Pre-Crash-Lehnenneigungs-Verstellmechanismus befindet sich dabei in einer Verriegelungsstellung - 3-, in der der rückenlehnenseitige Adapter K10 gegenüber dem Zahnsegment-Adapter C50 analog zu Figur 6.1 wieder verriegelt ist.

Erfindungsgemäß wird zwischen dem rückenlehnenseitigen Adapter K10 und dem sitzteilseitigen Adapter K20 des Dreh-/Taumelbeschlages K20 eine sogenannte Pre-Crash-Koppelebene (nachfolgend kurz Koppelebene genannt) gebildet, in der Komponenten angeordnet sind, welche die Kopplung beziehungsweise Entkopplung des Komfort-Lehnnenneigungs-Verstellmechanismus von dem Pre-Crash-Lehnenneigungs-Verstellmechanismus übernehmen, wie nachfolgend anhand der Beschreibung der Figuren 7.1 und 7.2 detailliert erläutert wird.

In der Koppelebene sind im Wesentlichen der rückenlehnenseitige Adapter K30 des Dreh-/Taumelbeschlages eine Sperrklinke C170 und ein sperrklinkenseitiges Schwingenelement einer Schwinge C150 angeordnet, wie noch erläutert wird.

Der rückenlehnenseitige Adapter K30 umfasst einen Bereich der nachfolgend als Klinkenverriegelungsbereich bezeichnet wird, wobei in dem Bereich im Wesentlichen auf der Umfangsfläche des rückenlehnenseitigen Adapters K30 eine Verzahnung C140 angeordnet ist.

Das zugehörige Hohlrad K31 des rückenlehnenseitigen Adapters K30 des Dreh-/Taumelbeschlages dreht sich im Rahmen der Komfort-Neigungsverstellung der Rückenlehne 14 gegenüber dem Stirnrad 21 des sitzteilseitigen Adapters K20 des Dreh-/Taumelbeschlages.

Steht die Verzahnung C140 einer Gegenverzahnung C170.1 der Sperrklinke C170 im Eingriff (vergleiche Figur 7.1) wird der rückenlehnenseitige Adapter K10 und auch der rückenlehnenseitige Zahnsegment-Adapter C50 sowie der Antrieb C71 oder der Antrieb C71 * mitgenommen und die Rückenlehne 14 wird in herkömmlicher Weise neigungsverstellt.

Mit anderen Worten, eine Drehbewegung der Querstange K40 wirkt auf das im sitzteilseitigen Adapter K20 angeordnete Stirnrad K21, wodurch das Hohlrad K31 in Drehbewegung versetzt wird, sodass die rückenlehnenseitigen Adapter K30 und die eingekoppelten rückenlehnenseitigen Adapter K10, C50 und somit die Rückenlehne 14 in ihrer üblichen Weise neigungsverstellt wird, jedoch nur dann, wenn der Pre-Crash-Entriegelungsmechanismus mit dem Komfort-Lehnenneigungs-Verstellmechanismus, insbesondere über die Sperrklinke C170 gekoppelt ist.

Der rückenlehnenseitige Zahnsegment-Adapter C50, der die Verzahnung C100 aufweist, ist mit dem rückenlehnenseitigen Adapter K30 des Dreh-/Taumelbeschlages fest verbunden. Das heißt, der rückenlehnenseitige Zahnsegment-Adapter C50 ist indirekt über den rückenlehnenseitigen Adapter K30, der das Hohlrad K31 aufweist, mit dem Stirnrad K21 und somit mit dem sitzteilseitigen Adapter K20 des Dreh-/Taumelbeschlages drehbar verbunden.

Wie die Figuren 6.1 bis 6.3 zeigen, weist der rückenlehnenseitigen Zahnsegment-Adapter C50 eine Öffnung auf, durch welche die Querstange K40 geführt ist, die zur Komfort-Neigungsverstellung der Rückenlehne 14 von dem Antrieb K41 in Drehbewegung versetzt wird.

Die Schnellverstellung des Pre-Crash-Lehnenneigungs-Verstellmechanismus der Rückenlehne 14, das heißt des rückenlehnenseitigen Adapters K10 zwischen dem rückenlehnenseitigen Adapter K30 des Dreh-/Taumelbeschlages und dem rückenlehnenseitigen Zahnsegment-Adapter C50 kann nur erfolgen, wenn die Kopplung in der Koppelebene aufgehoben wird.

Der Pre-Crash-Entriegelungsmechanismus umfasst zur Entkopplung der Sperrklinke C170 ferner eine Schwinge C150, die auf einer Schwingenachse Y150 angeordnet ist, wobei die Schwinge C150 drehbar in dem rückenlehnenseitigen Adapter K10 gelagert ist.

Die Schwinge C150 weist einen Verriegelungspin C150.1 auf, der in den Figuren 6.1 bis 6.3 auf den Betrachter gerichtet ist und orthogonal zu der Schwingenachse Y150 auf einem der Schwingenflügel angeordnet ist.

Ein Entkopplungspin C150.2 (vergleiche Figur 7.1) ist von dem Betrachter weg gerichtet und orthogonal zu der Schwingenachse Y150 auf dem anderen Schwingenflügel angeordnet, wobei der Entkopplungspin C150.2 durch eine Entkopplungspin-Kulisse C50.1 greift, die in dem rückenlehnenseitigen Adapter K10 angeordnet ist, wie am besten in Figur 6.2 sichtbar ist.

Der Pre-Crash-Entriegelungsmechanismus umfasst ferner einen Schwingenversteller C160, der auf der Drehachse Y90 des Zahnrades V90 (vergleiche auch Figur 7.2) angeordnet ist.

Der Schwingenversteller C160 weist an seinem halbkreisförmigen äußeren Korpus zwei Anschlagsendstücke CC und C160.3 auf, wobei zwischen den Anschlagsendstücken C160.1, C160.3 eine durch den Korpus gebildete stirnseitige Kontur 160.2 ausgebildet ist.

Im Vorgriff auf Figur 7.2 ist ersichtlich, dass der Schwingenversteller C160 in seinem kreisförmigen inneren Korpus zwei halbkreisförmige Stegkulissen C160. 4 und C160.5 aufweist, die im Zusammenbauzustand von zahnradseitigen Stegen C90.1 und C90.2 durchgriffen werden.

Die Stege C90.1 und C90.2 sind in der Verriegelungsstellung - 1 - gemäß Figur 6.1 in der Mitte der Stegkulissen C160. 4 und C160.5 angeordnet, sodass eine Drehbewegung des Zahnrades V90 erst nach einer bestimmten Drehbewegung zu einer Drehbewegung des Schwingenverstellers C160 führt, worauf noch eingegangen wird.

Die Figuren 7.1 und 7.2 zeigen den Pre-Crash-Koppelmechanismus des modifizierten Komfort-/Pre-Crash-Verstellmechanismus jeweils in zwei hinsichtlich der Vergrößerung unterschiedlichen Ansichten von Innen. In Figur 7.2 wurde der rückenlehnenseitige Adapter weggelassen, damit die Schwinge C150 und der Schwingenversteller C160 sowie das Zahnrad mit der Verzahnung C90 von der Rückseite mit Blick auf die Koppelebene sichtbar werden.

In Figur 7.1 ist die Verzahnung C140 des rückenlehnenseitigen Adapters K30 des Dreh-/Taumelbeschlages erkennbar. Die Verzahnung C140 und die Sperrklinke C170 liegen in der Koppelebene und befinden sich im Eingriff, so dass der Pre-Crash-Lehnenneigungs-Verstellmechanismus und der Komfort-Lehnenneigungs-Verstellmechanismus gemäß Figur 6.1 in der Verriegelungsstellung - 1 - miteinander gekoppelt sind.

Die Sperrklinke C170 weist die Gegenverzahnung C 170.1 auf, in welche die Verzahnung C140.1 eingreift.

Die Sperrklinke C170 weist einen Zapfen C170.2 auf, der auf der Sperrklinkenachse Y170 angeordnet ist, der in einem Aufnahmeelement C180 einliegt, das an dem rückenlehnenseitigen Adapter K30 des Dreh-/Taumelbeschlages angeordnet ist. Der Zapfen C170.2 ist in der Sperrklinke C170 fest gelagert. Die Sperrklinke C170 dreht um die Schwenkachse Y170 des Zapfens C170.2 in dem Aufnahmeelement C180.

Somit bleibt die Sperrklinkenachse Y170 gegenüber dem rückenlehnenseitigen Adapter K30 des Dreh-/Taumelbeschlages stets in der gleichen Position, während sich die Sperrklinke C170 gegenüber der Verzahnung C140 des rückenlehnenseitigen Adapters K30 des Dreh-/Taumelbeschlages verlagert.

Der rückenlehnenseitige Adapter K10 ist von dem rückenlehnenseitigen Adapter K30 des Dreh-/Taumelbeschlages K10 abgekoppelt, wenn die Sperrklinke C170 mit ihrer Gegenverzahnung C170.1 aus der Verzahnung C140 des rückenlehnenseitige Adapters K30 kommt, das heißt entriegelt ist.

Die Sperrklinke C170 umfasst ferner eine Kontur C170.3 (vergleiche Figur 7.2), deren Konturfläche quer zu der Koppelebene verläuft. Diese Konturfläche der Kontur C170.3 wirkt, wie nachfolgend noch erläutert wird, mit dem Entkopplungspin C150.2 zusammen der ebenfalls quer zu der Koppelebene (vergleiche Figur 7.2) verläuft.

Zudem ist ein Sicherungselement C190 angeordnet, welches den rückenlehnenseitigen Adapter K30 des Dreh-/Taumelbeschlages und die Sperrklinke C170 hinsichtlich ihrer Lage in der Koppelebene sichert, wobei das Sicherungselement C190 in dem rückenlehnenseitigen Adapter K10 fest angeordnet ist und die Schwenkbewegung der Sperrklinke C170 um Y170 zulässt .Das Sicherungselement C190 übergreift die Koppelebene derart, sodass die Sperrklinke C170 um die Sperrklinkenachse Y170 drehbeweglich bleibt.

Die Schwinge C150 auf der Schwingenachse Y150 weist im Wesentlichen in der Koppelebene liegend ein fest mit dem rückenlehnenseitigen Adapter 10 (der in Figur 7.1 und nicht in Figur 7.2 dargestellt ist) in Verbindung stehendes Rückstellfederhalterelement C200.1 auf, welches einen Federelementhaltepin C200.11 aufweist, an dem ein Ende des Federelementes C200 angeordnet ist. Das andere Ende des Federelementes C200 greift an dem drehbeweglichen Schwingenlager an.

Das Federelement C200 ist in der Verriegelungsstellung - 1 - gemäß Figur 6.1 leicht vorgespannt und kommt bei der Betätigung des Pre-Crash-Lehnenneigungs-Verstellmechanismus in einen stärker gespannten Zustand, wie noch erläutert wird.

In einer Zusammenschau der Figuren 6.1 bis 6.3 und 7.1 bis 7.2 wird die Funktionsweise des Pre-Crash-Koppelmechanismus innerhalb des Komfort-/Pre-Crash-Verstellmechanismus nachfolgend detailliert erläutert.

Bezugnehmend auf die Figuren 6.1 bis 6.3 wird zunächst darauf verwiesen, dass die Rückenlehne 14, die in den genannten Figuren durch den rückenlehnenseitigen Adapter K10 und den zugehörigen Antrieb C71; C71* symbolisiert ist, in den Figuren 6.1 und 6.2 noch in der Liegeposition/Ruheposition III angeordnet ist.

Erst in Figur 3 hat sich die Lage des rückenlehnenseitigen Adapters K10 und die Lage des zugehörigen Antriebs C71; C71* in die Arbeitsposition II verändert.

Diese Veränderung ist mittels des Pre-Crash-Lehnenneigungs-Verstellmechanismus möglich, wenn die Sperrklinke C170 (vergleiche Figur 7.1) von dem rückenlehnenseitigen Adapter K30 des Dreh-/Taumelbeschlages entkoppelt ist.

In Figur 6.1 ist die Ausgangsposition (Rückenlehne 14 in Liegeposition/Ruheposition III) dargestellt, wobei das erste Anschlagsendstück C160.1 den Verriegelungspin C150.1 der Schwinge C150 in Verriegelungs- und Sicherungsstellung hält. Dadurch wird in vorteilhafter Weise die Schwinge C150 gesichert, so dass die nachfolgend beschriebene Entkopplung der Sperrklinke C170 nicht ohne weiteres möglich ist.

In einem ersten Schritt wird der oder die Antrieb(e) C71, C71* in Betrieb gesetzt, wodurch (vergleiche Figur 7.2) das Zahnrad mit der Verzahnung C90 in Drehbewegung versetzt wird, so dass sich der Schwingenversteller C160 gemäß den Figuren 6.1 bis 6.2 entgegen der Uhrzeigerrichtung und in Bezug auf die Figuren 7.1 und 7.2 in Uhrzeigerrichtung um die Schwenkachse Y90 bewegt.

Wie bereits erläutert, weist der Schwingenversteller C160 die halbkreisförmigen Stegkulissen C160.4 und C160.5 (vergleiche Figur 7.2) auf, die es erlauben, dass eine Drehbewegung der Querstange C70, die fest mit dem Schwingenversteller C160 in Verbindung steht, aufgrund des durch die Stegkulissen C160.4 und C160.5 erzeugten Freilaufes zu einer Drehbewegung des Schwingenverstellers C160 aber noch nicht zu einer Drehbewegung des Zahnrades um die Schwenkachse Y90 führt. Das Zahnrad wird erst in einer Drehbewegung verssetzt, wenn die Stege C90.1, C90.2 in den Stegkulissen C160.4 und C160.5 auf die seitliche Begrenzung der Stegkulissen C160.4 und C160.5 treffen.

Mit anderen Worten weist der Pre-Crash-Koppelmechanismus eine Freilauffunktion auf.

Diese Freilauffunktion bewirkt, wie durch Vergleich der Figuren 6.1 und 6.2 erkennbar ist, dass der Verriegelungspin C150.1 von dem Anschlagsendstück 160.1 frei kommt, da der Schwingenversteller C160 entgegen der Uhrzeigerrichtung (ohne das Zahnrad) um die Schwenkachse Y90 verschwenkt wird, wobei der Entriegelungspin C150.1 gleichzeitig auf dem auf der stirnseitigen Kontur 160.2 des Schwingenverstellers C160 abläuft.

Dadurch wird die Schwinge C150 um die Schwingenschwenkachse Y150 ebenfalls gegen die Uhrzeigerrichtung verschwenkt, so dass der Entkopplungspin C150.2 in der Kulisse C50.1 (vergleiche wiederum Figuren 6.1 und 6.2) entgegen der Uhrzeigerrichtung in der Kulisse C50.1 bewegt wird.

In den Figuren 7.1 und 7.2 ist eine erste Stellung des Entkopplungspins C150.2-1 gezeigt, die zu Figur 6.1 gehört, in der die beschriebene Verriegelungsstellung - 1 - der Schwinge C150 durch den Schwingenversteller C160 vorliegt.

In den Figuren 7.1 und 7.2 ist eine zweite Stellung des Verriegelungspins C150.1-2 gezeigt, die zu der Stellung der Schwinge C150 gemäß Figur 6.2 gehört, bei der die Sperrklinke C170 immer noch im Eingriff mit der Verzahnung C140 des rückenlehnenseitigen Adapters K30 ist. Der Entkopplungspin C150.2-1 nimmt dann (vergleiche Figur 7.2) eine zweite Stellung C150.2-2 ein.

Wie aus Figur 6.3 entnommen werden kann, kommt der Verriegelungspin C150.1 in die dritte Stellung C150.1-3, bei der die Schwinge C150 von dem Schwingenversteller C160 wieder verriegelt in der Verriegelungsstellung - 3- ist, wenn der Entkopplungspin C150.2-3 das Ende der Kulisse C50.1, wie in Figur 6.3 dargestellt ist, erreicht hat.

Dabei ist das andere Anschlagsendstück C160.3 derart angeordnet, dass es den Verriegelungspin C150.1 nach einer vollständigen Schwenkbewegung der Schwinge C150 wieder verriegelt.

Sobald der Freilauf beendet ist, das heißt die Stege C90.1, C90.2 laufen je nach Drehrichtung des Schwingenverstellers C160 in den jeweiligen Stegkulissen C160.4 und C160.5 (vergleiche Figur 7.2) auf, befindet sich der Entkopplungspin C150.2 in der dritten Stellung C150.2-3, die in Figur 7.2 nicht dargestellt ist. Dort ist die Stellung des Entkopplungspins C150.2 dargestellt, die zu der Entriegelungsstellung 2 des Verriegelungspins C150.1 in der Stellung 150.1-2 gehört, bei der sich die Sperrklinke C170 noch im Eingriff befindet.

Zur Erreichung der Stellung, bei der sich die Sperrklinke C170 außer Eingriff befindet, läuft der Entkopplungspin C150.2 zuvor auf der Kontur C170.3 der Sperrklinke 170 entlang und erreicht dabei den endseitig der Sperrklinke C170 ausgebildeten Sperrklinkenhaken C140.4, so dass die Sperrklinke C170 außer Eingriff kommt, da sie nunmehr um die Sperrklinkenschwenkachse Y170 gemäß Figur 7.1 gegen die Uhrzeigerrichtung geschwenkt wird.

Der Pre-Crash-Koppelmechanismus ist jetzt von dem Dreh-/Taumelbeschlag entkoppelt und kann somit unabhängig von dem Komfort-Lehnenneigungs-Verstellmechanismus verstellt werden.

Zur Schnellverstellung der Rückenlehne 14 mittels des Pre-Crash-Lehnenneigungs-Verstellmechanismus läuft antriebsunterstützt und optional durch den in den Figuren gezeigten und beschriebenen Pre-Crash-Lehnenneigungs-Verstellmechanismus federelementunterstützt gemäß Figur 6.3 die Verzahnung C90 des Ritzels in der Verzahnung C100 des rückenlehnenseitigen Zahnsegment-Adapters C50 ab.

Nach dem Ablauf der Verzahnung C90 des Ritzels in der Verzahnung C100 des rückenlehnenseitigen Zahnsegment-Adapters C50 bleibt der entkoppelte Zustand bestehen.

In vorteilhafter Weise ist jedoch die Rückenlehne 14 dadurch, dass das Anschlagsendstück C160.3 des Schwingenverstellers C160 auf den Verriegelungspin in der Verriegelungsstellung C150.1-3 aufläuft, in seiner Position 143, II gesichert.

Solange der oder die Antrieb(e) C71, C71* oder optional ein Federelement, gemäß den Figuren 4.1 und 4.2 des Pre-Crash-Lehnenneigungs-Verstellmechanismus die Querstange C70 und somit den Schwingenverstellers C160 in der Verriegelungsstellung C150.1-3 hält, kann die Rückenlehne 14 nicht weiter nach vorne gemäß Figur 6.3 entgegen der Uhrzeigerrichtung geklappt werden, da sich der Schwingenversteller C160 auf dem Verriegelungspin C150.1 in Verriegelungsstellung C150.1-3 abstützt, wobei die Schwinge C150 selbst durch den Entkopplungspin C150.2 in der Kulisse C50.1 an einem Ende der Kulisse C50.1 abgestützt ist.

Somit ist in vorteilhafter Weise nicht nur ein entkoppelbarer Pre-Crash-Koppelmechanismus ausgebildet, sondern die jeweiligen Positionen der Rückenlehne 14 vor und nach der entsprechenden Schnellverstellung sind durch die Komponenten des Pre-Crash-Koppelmechanismus entsprechend gesichert.

Wie bereits aus den Figuren erkennbar ist, weist die Schwinge C150 ein verstellerseitiges Schwingenelement C150a und ein sperrklinkenseitiges Schwingenelement C150b auf. Die beiden Schwingenelemente sitzen sich im Wesentlichen unter Zwischenanordnung des rückenlehnenseitigen Adapters K10 in axialer Richtung der Schwenkachse Y150 gesehen - gegenüber und sind gemeinsam auf der Schwenkachse Y150 angeordnet.

Das bereits erwähnte Federelement C200 wird bei der beschriebenen Entkopplungsbewegung der Sperrklinke C170 gespannt und sorgt für eine Rückstellung der Schwinge C150 und des Schwingenverstellers C160 in umgekehrter Reihenfolge von der Verriegelungsstellung C150.1-3 des Verriegelungspins C150 in die Verriegelungsstellung C150.1-1 des Verriegelungspins C150, mithin in die Ausgangsposition gemäß Figur 6.1 unter gleichzeitiger Betätigung der Querstange C70 über die/den oder die Antriebe C71, C71*.

Bei dieser Rückverstellung läuft der Entkopplungspin C51.2 auf der Kontur C170.3 der Sperrklinke C170 (gemäß den Figuren 7.1 und 7.2 gegen die Uhrzeigerrichtung) ab, so dass die Sperrklinke C170 wieder mit dem rückenlehnenseitigen Adapter K30 des Dreh-/Taumelbeschlages in Eingriff kommt, so dass die Kopplung wieder hergestellt ist.

Im Übrigen weist das sperrklinkenseitige Schwingenelement C150b ebenfalls eine Kontur (ohne Bezugszeichen) auf, die sowohl bei der Entkopplung als auch bei der Kopplung der Sperrklinke C170 auf der Sperrklinkenkontur C170.3 abläuft, so dass die Sperrklinke C170 in beiden Fällen auf einer durch die Kontur genau vorgegebenen Schwenkbahn sicher geöffnet und wieder geschlossen wird.

Nach der Kopplung führt eine entsprechende Betätigung der Übertragungsstange K40 über den zugehörigen Antrieb K41 zu einer entsprechenden Komfort-Neigungsverstellung der Rückenlehne 14 unter Mitnahme der über die Sperrklinke C170 angekoppelten Komponenten.

Dadurch, dass das Aufnahmeelement C180 an dem rückenlehnenseitigen Adapter K30 des Dreh-/Taumelbeschlages angeordnet ist, wird nach entsprechender Kopplung der Sperrklinke C170 eine Drehbewegung des das Hohlrad K31 aufweisenden rückenlehnenseitigen Adapters K30 stets zu einer Mitnahme der Schwinge C150 und damit des rückenlehnenseitigen Adapters K10 und des rückenlehnenseitigen Zahnsegment-Adapters C50 führen.

### Bezugszeichenliste

- F: Fahrzeug
- 10: Fahrzeugsitz
- 12: Sitzteil
- 14: Rückenlehnenteil
- 14; I: Fahrposition 14;I
- 14; II: Arbeitsposition
- 14; III: Liegeposition/Ruheposition
- α1: Neigungswinkel des Rückenlehnenteiles 14 in Fahrposition 14;I
- α2: Neigungswinkel des Rückenlehnenteiles 14 in 14;II Arbeitsposition
- α3: Neigungswinkel des Rückenlehnenteiles 14 in Liegeposition 14;III
- Δα: Rückstellwinkel
- P1: Auslegungspunkt Neigungswinkel
- P2: Auslegungspunkt Neigungswinkel
- S: Insassenschutzsystem
- R: Überwachungs- und Rückhaltesystem
- R1: Gurtstraffer
- R2: Umfeldsensorik
- R3: Innenraumsensorik
- R4: Winkelsensor
- R5: Sitzbelegungssensorik
- S12: Sitzsteuergerät
- S13: Airbagsteuergerät
- t_{vor-A}: frühester Pre-Crash-Zeitpunkt
- t_{vor-E}: spätester Pre-Crash-Zeitpunkt
- t₀: Crash-Zeitpunkt
- K10: Adapter (rückenlehnenseitig)
- K10.1: Rückstellfederhalteelement
- K10.11: Federelementhaltepin
- K20: sitzteilseitiger Adapter des Dreh-/Taumelbeschlages
- K21: Stirnrad
- K30: rückenlehnenseitiger Adapter des Dreh-/Taumelbeschlages
- K31: Hohlrad
- Y1: Schwenkachse des Beschlages
- K40: Querstange
- K41: Antrieb des Drehbeschlages/Taumelbeschlages
- C50: rückenlehnenseitiger Zahnsegment-Adapter
- C50.1: Kulisse des Entkopplungspins C150.2
- C60: Hebelelement
- C60.1: inneres Hebelelement
- C60.11: Nase
- C60.2: äußeres Hebelelement
- C61: Verbindungselement
- C62: Lagerelement
- C70: Querstange
- C71: Antrieb Typ A des elektromechanischen Schnellverstell-Mechanismus
- C71*: Antrieb Typ B des elektromechanischen Schnellverstell-Mechanismus
- C71.1*: Planetengetriebe/Wolfrom-Planetengetriebe
- C80: Federelement, Spiralfeder
- C90: Zahnrad mit Verzahnung
- C90.1: Steg
- C90.2: Steg
- Y90: Drehachse des Zahnrades C90
- C100: Verzahnung des rückenlehnenseitigen Zahnsegment-Adapters C50
- C110: Führungskontur (Kulisse)
- C120: Anschlagselement-(Pin)
- C130: Mitnehmer-(Pin)
- C140: Verzahnung des rückenlehnenseitigen Adapters K30
- C150: Schwinge
- C150a: verstellerseitiges Schwingenelement
- C150b: sperrklinkenseitiges Schwingenelement
- Y150: Schwenkachse der Schwinge
- C150.1: Verriegelungspin
- - 1 -: Verriegelungs- und Sicherungsstellung (Sperrklinke C170 im Eingriff)
- C150.1-1: Verriegelungspin in Verriegelungs- und Sicherungsstellung - 1 -
- - 2 -: Entriegelungsstellung (Sperrklinke C170 im Eingriff)
- C150.1-2: Verriegelungspin in Zwischenstellung - 2 -
- - 3 -: Verriegelungs- und Sicherungsstellung (Sperrklinke C170 außer Eingriff)
- C150.1-3: Verriegelungspin in Verriegelungs- und Sicherungsstellung - 3 -
- C150.2: Entkopplungspin
- C150.2-1: erste Stellung Entkopplungspin, wenn C150.1-1 in Verriegelungs- und Sicherungsstellung - 1 -
- C150.2-2: zweite Stellung Entkopplungspin, wenn C150.1-2 in Zwischenstellung - 2 --
- C150.2-3: dritte Stellung Entkopplungspin, wenn C150.1-3 in Verriegelungs- und Sicherungsstellung - 3 -
- C160: Schwingenversteller
- C160.1: Anschlagsendstück
- C160.2: Kontur des Schwingenverstellers
- C160.3: Anschlagsendstück
- C160.4: Stegkulisse
- C160.5: Stegkulisse
- C170: Sperrklinke
- C170.1: Gegenverzahnung
- C170.2: Sperrklinkenzapfen
- C170.3: Sperrklinkenkontur
- C170.4: Sperrklinkenhaken
- Y170: Schwenkachse der Sperrklinke C170
- C180: Aufnahmeelement
- C190: Sicherungselement
- C200: Rückstellfederelement, Spiralfeder
- -x: Fahrtrichtung des Fahrzeuges 1
- +x: Richtung entgegen der Fahrtrichtung des Fahrzeuges 1
- z: Richtung in der Vertikalen quer zu +/-x-Richtung
- Z: Vertikale
- y: Richtung in der Horizontalen quer zu +/-x-Richtung

## Patentansprüche

1. Insassenschutzsystem (S) eines Fahrzeuges (F), welches ein Überwachungs- und Rückhaltesystem (R) umfasst, das mittels einer Umfeldsensorik (R2) zu einem Pre- Crash-Zeitpunkt (t_{vor-A}, t_{vorE}) einen etwaigen Crash erkennt, und eine sich im Crashfall zu einem Crashzeitpunkt (t₀) im Wesentlichen in der Fahrposition (I) auf einem Fahrzeugsitz (10) befindende Person (P) mittels eines Rückhaltesystems (R; R1) des Fahrzeugsitzes (10) sicher auf dem Fahrzeugsitz (10) zurückhält, **dadurch gekennzeichnet, dass** die Rückenlehne (14) einen kombinierten Komfort-/Pre-Crash-Verstellmechanismus aufweist, mittels dem eine Rückenlehne (14) außerhalb eines Crashfalls gegenüber einem Sitzteil mittels eines Komfort-Lehnenneigungs-Verstellmechanismus neigungsverstellbar und im Crashfall mittels eines Pre-Crash-Lehnenneigungs-Verstellmechanismus ab einem sensierten Pre-Crash-Zeitpunkt (t_{vor-A}, t_{vorE}) noch vor dem Crashzeitpunkt (t₀) aktiv in die Fahrposition (I) bringbar ist, wenn sich die Rückenlehne (14) zum Pre-Crash-Zeitpunkt (t_{vor-A}, t_{vorE}) außerhalb der Fahrposition (I) befindet, wobei der Pre-Crash-Lehnenneigungs-Verstellmechanismus zum Pre- Crash-Zeitpunkt (t_{vor-A}, t_{vorE}) von dem Komfort-Lehnenneigungs-Verstellmechanismus entkoppelbar ist.

2. Insassenschutzsystem (S) nach Anspruch 1, **dadurch gekennzeichnet, dass** durch eine Sensorik (R3, R4) des Insassenschutzsystems (S) eine spezifische Sensierung der Position (I, II, III) des aktiven Rückenlehnenteiles (14) in einem vorgebbaren Sitzlehnen-Neigungswinkelbereich vorgesehen ist, wobei ein Sitzsteuergerät (S12) über den Pre- Crash-Lehnenneigungs-Verstellmechanismus eine Anpassung des Sitzlehnen-Neigungswinkels (α2, α3) vornimmt, wenn der Fahrzeugsitz (10) durch eine Sitzbelegungssenorik (R5) als belegt erkannt wird und die aktive Rückenlehne (14) zum Pre-Crash-Zeitpunkt (t_{vor-A}, t_{vorE}) nicht in der Fahrposition (I) angeordnet ist.

3. Insassenschutzsystem (S) nach Anspruch 1 oder 2, **dadurch gekennzeichnet, dass** die Anpassung des Sitzlehnen-Neigungswinkels (α2, α3) durch den Pre-Crash-Lehnenneigungs-Verstellmechanismus erfolgt, der mindestens einen Antrieb (C71, C71*) aufweist, der eine Schnellverstellung der aktiven Rückenlehne (14) zur Anpassung des Sitzlehnen-Neigungswinkels (α2, α3) ermöglicht.

4. Insassenschutzsystem (S) nach Anspruch 3, **dadurch gekennzeichnet, dass** die Anpassung des Sitzlehnen-Neigungswinkels (α2, α3) der aktiven Rückenlehne (14) durch den Pre-Crash-Lehnenneigungs-Verstellmechanismus mittels des mindestens einen Antriebs (C71, C71*) durch ein vorgespanntes Federelement (C80) unterstützt wird, die in dem Pre-Crash-Lehnenneigungs-Verstellmechanismus integriert ist, wobei das Federelement (C80) zwischen dem Pre-Crash-Zeitpunkt (t_{vor-A}, t_{vorE}) und dem Crashzeitpunkt (t₀) mit dem mindestens einen Antrieb (C71, C71*) zusammenwirkt.

5. Insassenschutzsystem (S) nach Anspruch 3 oder 4, **dadurch gekennzeichnet, dass** im Crashfall mittels des Pre-Crash-Lehnenneigungs-Verstellmechanismus eine positionsabhängige Rückstellung der aktiven Rückenlehne (14) um einen vorgegebenen Neigungswinkel von Δα </= 20° des Rückenlehnenteils (14) in einer vorgegebenen Zeitspanne zwischen 100 ms und 500 ms und/oder positionsunabhängig eine Rückstellung der aktiven Rückenlehne (14) um einen vorgegebenen maximalen Rückstellwinkel Δα = 20° in einer vorgegebenen Zeitspanne zwischen 100 ms und 500 ms erfolgt.

6. Insassenschutzsystem (S) nach Anspruch 3 oder 4, **dadurch gekennzeichnet, dass** der mindestens eine Antrieb (C71; C71*) ein Bürsten aufweisender Gleichstrommotor oder mindestens ein bürstenloser DC-Hochleistungs-Gleichstrommotor ist, der auf eine Querstange (C70) wirkt, die den Pre-Crash-Lehnenneigungs-Verstellmechanismus antreibt.

7. Insassenschutzsystem (S) nach Anspruch 6 oder 4, **dadurch gekennzeichnet, dass** der mindestens eine Antrieb (C71; C71*) mit einem Planetengetriebe (C71.1*) oder einem Wolfrom-Planetengetriebe (C71.1*) gekoppelt ist, das auf die Querstange (C70) wirkt, die den Pre-Crash-Lehnenneigungs-Verstellmechanismus antreibt.

8. Insassenschutzsystem (S) nach Anspruch 1, **dadurch gekennzeichnet, dass** der Pre- Crash-Lehnenneigungs-Verstellmechanismus mit dem Komfort-Lehnenneigungs-Verstellmechanismus gekoppelt ist, wobei zur Anpassung des Sitzlehnen-Neigungswinkels (α2, α3) eine Entkopplung vorgenommen wird, wenn der Fahrzeugsitz (10) durch eine Sitzbelegungssenorik (R5) als belegt erkannt wird, und die aktive Rückenlehne (14) zum Pre-Crash-Zeitpunkt (t_{vor-A}, t_{vorE}) nicht in der Fahrposition (I) angeordnet ist.

9. Insassenschutzsystem (S) nach Anspruch 1, **dadurch gekennzeichnet, dass** der Pre- Crash-Koppelmechanismus eine Sperrklinke (170) ist, die zwischen dem Komfort-Lehnenneigungs-Verstellmechanismus und dem Pre-Crash-Lehnenneigungs-Verstellmechanismus angeordnet ist, wobei die Sperrklinke (C170) des Pre-Crash-Lehnenneigungs-Verstellmechanismus gegenüber dem Komfort-Lehnenneigungs-Verstellmechanismus im gekoppelten Zustand und im entkoppelten Zustand durch die Komponenten des Pre-Crash-Lehnenneigungs-Verstellmechanismus jeweils in einer Verriegelungsstellung (1, 3) gehalten ist.

10. Insassenschutzsystem (S) nach Anspruch 1, **dadurch gekennzeichnet, dass** der kombinierte Komfort-/Pre-Crash-Verstellmechanismus als kompakter Beschlag ausgebildet ist, wobei der Komfort-Lehnenneigungs-Verstellmechanismus ein Dreh-/Taumelbeschlag ist, der zwischen Sitzteil des Fahrzeugsitzes (10) und Rückenlehnenteil (14) des Fahrzeugsitzes (10) angeordnet ist, wobei der Dreh-/Taumelbeschlages mit dem Pre-Crash-Lehnenneigungs-Verstellmechanismus kombiniert ausgebildet ist.

11. Insassenschutzsystem (S) nach Anspruch 1, **dadurch gekennzeichnet, dass** die Kopplung des Komfort-Lehnenneigungs-Verstellmechanismus, insbesondere des Dreh-/Taumelbeschlages mit dem Pre-Crash-Lehnenneigungs-Verstellmechanismus eine herkömmliche Komfort-Neigungsverstellung gewährleistet, da Sperrklinke (C170) im gekoppelten Zustand eine Drehbewegung einer Querstange (K40) des Dreh-/Taumelbeschlages, die durch einen Antrieb (K41) des Komfort-Lehnenneigungs-Verstellmechanismus angetrieben wird, auf die Komponenten den Pre-Crash-Lehnenneigungs-Verstellmechanismus überträgt.

12. Rückenlehne (14), aufweisend einen kombinierten Komfort-/Pre-Crash-Verstellmechanismus, mittels dem eine Rückenlehne (14) außerhalb eines Crashfalls gegenüber einem Sitzteil mittels eines Komfort-Lehnenneigungs-Verstellmechanismus neigungsverstellbar und im Crashfall mittels eines Pre-Crash-Lehnenneigungs-Verstellmechanismus ab einem sensierten Pre-Crash-Zeitpunkt (t_{vor-A}, t_{vorE}) noch vor dem Crashzeitpunkt (t₀) aktiv in die Fahrposition (I) bringbar ist, wenn sich die Rückenlehne (14) zum Pre-Crash-Zeitpunkt (t_{vor-A}, t_{vorE}) außerhalb der Fahrposition (I) befindet, wobei der Pre-Crash-Lehnenneigungs-Verstellmechanismus zum Pre-Crash-Zeitpunkt (t_{vor-A}, t_{vorE}) von dem Komfort-Lehnenneigungs-Verstellmechanismus entkoppelbar ist.
